# EUROPEAN PATENT SPECIFICATION

(11) **EP 3 381 567 B1**
(45) Date of publication and mention of the grant of the patent: **27.01.2021**
(21) Application number: 18164141.6
(22) Date of filing: 27.03.2018
(51) Int. Cl.: B05B 7/08, B05B 7/04, B05B 1/26

(54) **AN AIRLESS SPRAY DEVICE**
AIRLESS-SPRÜHGERÄT
DISPOSITIF DE PULVÉRISATION SANS AIR

(30) Priority: 28.03.2017 IT 201700033873
(43) Date of publication of application: 03.10.2018
(73) Proprietor: Trovi, Roberto, 51039 Quarrata (Pistoia) (IT)
(72) Inventor: Trovi, Roberto, 51039 Quarrata (Pistoia) (IT)
(74) Representative: Firmati, Leonardo

(56) References cited:
- US-A- 3 840 179
- US-A- 4 928 884
- US-A1- 2016 030 955
- US-A1- 2017 173 609

## Description

The invention relates to an airless spray device, also known as airbrush or spray gun, designed to allow the mixing between two products during the spraying step without the aid of compressed air as transport vehicle.

Airless spray systems substantially consist of a pump which sucks the product from a container and sends it at high pressure, through a pipe, to the spray device.

The operating principle is based on the sudden pressure drop at the outlet of the spray device which causes the nebulising of the fluid, producing small drops of pure fluid, that is, not mixed with air or other gases, which reach the product to be treated at low speed.

The lack of transport air and the low speed of the fluid particles reduces the rebound of product on the product to be treated.

Moreover, another important advantage of the airless spray devices is the fact that the so-called overspray is practically zero, allowing a considerable benefit for the health of the operator.

The term overspray is used to mean the portion of fluid coming from the spraying device which does not deposit on the surface of the product to be treated but is dispersed into the environment.

The overspray does not bring any advantage to the treatment process, for example of gluing, but, on the contrary, is very harmful in terms of overall efficiency of the operation, since it increases the quantity of fluid which must be dissipated and increases considerably the levels of atmospheric emission.

A fluid which can be used is, for example, a water-based or other type of solution of an adhesive or of a catalyst.

This invention is suitable particularly for making a manual airless spray device, that is to say, having a handgrip which can be gripped by an operator when the device is being used.

The airless spray devices of the type mentioned above typically comprise an actuator which allows the simultaneous cogeneration of two jets of nebulised product.

The actuator can be controlled by a pushbutton, or trigger, which can be actuated by an operator to control the spraying step.

It is important that, during the spraying step, the actuator guarantees a desired mixing ratio between the products, by means of a correct synchronisation of the jets of products with the respective jets of nebulising air, when it is present.

It is also very important that the two jets of nebulised product are incident in such a way as to be mixed before encountering the surface to be treated.

For example, in the case that the first product is an adhesive and the second product is a catalyst, if the two products do not mix before impact with the surface to be treated the adhesive would not be activated for its correct operation.

In the way that it is important that the two jets are incident before encountering the surface to be treated, it is also essential that the impact between the jets is such as to not substantially modify their main direction. Devices are known for spraying two products, for example an adhesive and the respective catalyst, comprising two respective outfeed nozzles from the spray device.

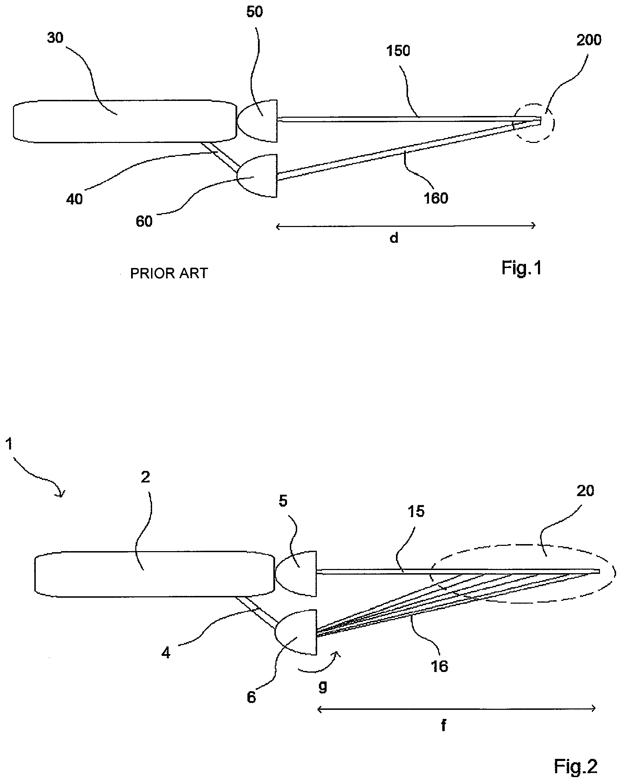

Figure 1 schematically shows a top view of a known airless spray device in which the numeral 30 identifies the main body of the spray device.

In one end of the main body 30 there are two spray heads 50, 60 dedicated, respectively, to the first and second material to be sprayed. Typically, the second head 60 is connected by connecting means 40 to the body 30.

The heads 50 and 60 are shaped in such a way as to emit two jets of the blade type, 150, 160, that is to say, concentrated on a limited portion of space.

In practice, the nebulized jet adopts a shape having extremely narrow base (in terms of the base surface of the jet in the mixing zone 200), that is to say, having an extension substantially on a single plane, in the case in the drawing on the vertical plane.

The shape of the two jets 150, 160 ensures that the mixing zone 200 is very narrow in extension, since it is constituted by the two bases of the jets which, as mentioned above, are extremely narrow and it only occurs at a distance D which is extremely precise with respect to the outlet of the two heads 50, 60.

Moreover, since the two jets are of the blade type, that is to say, having a high concentration of particles of product dispensed relative to the surface covered by the jet, the one relative to the other, at the moment of mutual impact, may cause a deviation in the direction of the corresponding flow generated resulting in loss of the complete control of the device by the user.

For example, according to patent US4928884 which shows a dispensing head for applying on a respective spray device consisting of a main nozzle positioned in a substantially central position of the head and designed for dispensing a first product (for example, a resin).

The above-mentioned main nozzle dispenses a flow or jet shaped in the form of a blade or wall, that is to say, having an extension substantially on a single plane, for example a vertical plane.

At the sides of the main nozzle, in a position aligned with each other, there are, in order of increasing distance from the main nozzle, two first secondary nozzles, designed to dispense a second product (for example, a catalyst) which must be mixed with the first product.

The two first nozzles also dispense a jet or flow in the shape of a blade or wall.

In this situation the two jets of second product must be positioned symmetrically relative to the first nozzle for balancing the movement forces due to the impact between the first and the second jets, however in view of the closeness of the point of impact between the various products and the relative outlet points there is a considerable risk of production of solid or semisolid lumps.

This problem is more significant, so much so that the known device cannot be used, with water-based bicomponent adhesives and respective catalysts.

Another spray device known is described in US2017/173609A1.

The prior art spray devices therefore have considerable drawbacks.

A first major drawback is due to the fact that since the mixing zone is very narrow and almost concentrated in a point, there is a high risk of a user not standing at the correct distance "d" relative to the surface to be treated and therefore reaching the surface with the two products not completely mixed.

The above-mentioned drawback is increasingly significant since the spray devices are generally used with alternating movements of the user's hand and therefore also subject to an undesired moving away/towards of the heads relative to the surface to be treated.

Another major drawback is due to the fact that jets are used in the prior art devices having substantially the shape of a blade, that is to say, having a high concentration of product particles per unit of space.

The high concentration of product particles per unit of space results in a not insignificant transfer of kinetic energy which at the moment of impact between the two jets causes an inevitable deviation of the main direction of spray.

In this context, the technical purpose which forms the basis of the invention is to provide an airless spray device which can overcome the above-mentioned drawbacks of the prior art.

A further aim of this invention is to provide a spray device by means of which a mixing of the two products coming out of the device can be obtained in an optimum, safe and certain manner.

Another aim of this invention consists in extending the mixing area of the two products sprayed by the airless spray device in such a way as to greatly reduce the risk of obtaining an incorrect and incomplete mixing of the products before encountering the surface to be treated.

Lastly, a further aim of the invention is to provide a spray device which is able to mix two separate products, for example an adhesive and a respective catalyst, without the risk that at the moment of impact between the two jets the main spray direction is in any way deviated.

The technical purpose indicated and the aims specified are substantially achieved by an airless spray device, comprising the technical features described in one or more of the appended claims.

Further features and advantages of the invention are more apparent in the non-limiting description which follows of a preferred embodiment of an airless spray device as illustrated in the accompanying drawings, in which:
- Figure 1 is a schematic top view of an airless spray device of known type;
- Figure 2 is a schematic top view of an airless spray device according to the invention in a first condition of use;
- Figure 3 is a schematic side view of an airless spray device according to the invention in the condition of use of Figure 2 and
- Figure 4 is an exploded view of some components forming part of an airless spray device according to the invention.

With initial reference to Figure 2, a description is given below of an airless spray device 1 in which its basic embodiment comprises a main body 2, at least a first 5 and a second 6 spray head of a respective first and second fluid product.

Both the heads 5, 6 are connected to the main body 2.

More specifically, the first head 5 may be directly connected to an end of the body 2 and the second head may be connected to the body by a rigid connecting element 4.

The first head 5 comprises a respective first nozzle 9 shaped to emit a first nebulised jet 15 in the form of a blade or wall of the first fluid product along a first predetermined direction, that is to say, flowing out from the first nozzle 9.

A nebulized jet in the form of a blade or wall 15 means a jet which extends in area mainly only in one direction, in the example shown in the drawings in a vertical direction, and which therefore has an area of nebulised product substantially in the form of a very elongate and squashed ellipse, comparable to a line.

The jet in the form of a blade or wall 15 is characterised in that it comprises a high concentration of particles of the first fluid product in the unit of space, that is to say, it creates a blade or wall comprising the particles of the first fluid product very close together to form a compact face.

The jet in the form of a blade 15 is of the airless type, that is to say, without the presence of transport air mixed in the first fluid.

The second head 6 comprises a respective second nozzle 10 shaped to emit a second nebulised conical jet 16, that is to say, in the form of a cone of the second fluid product, along a second predetermined direction.

The jet in the form of a cone 16 is also of the airless type, that is to say, without transport air mixed in the first fluid.

In practice, a jet in the form of a cone 16 projects from the head, that is to say, it extends from the tip of the cone (positioned at the nozzle 10) towards the base of the cone which is at a predetermined distance from the nozzle 10 and which corresponds to the intersection area with the first blade jet 15 of the first fluid product.

The base of the cone jet 16, is in the form of an ellipse having its larger semi-axis oriented in the same direction as the first predetermined direction of the first jet 15 of the first fluid product.

Advantageously, the dimensional ratio between the larger semi-axis and the smaller semi-axis of the basic ellipse of the cone-shaped jet 15, that is, corresponding to the mixing zone 20 of the two jets, is between 1:1 and 5:1.

The jet in the form of a cone 16 is characterised by a less concentrated distribution of fluid particles in space relative to the blade jet, under equal flow rate conditions.

That is to say, an equal number of fluid product particles flowing out from a nozzle configured for emitting a cone jet 16 with respect to a nozzle configured for emitting a blade or wall jet 15 corresponds to a greater mutual distance between them, that is, they are more rarefied.

In this way, the kinetic energy of the cone jet 16 is distributed on a greater area than that present in the corresponding blade jet 15.

In practice, in this way, an annulment of the quantity of impact motion of the cone jet 16 is obtained upon the intersection with the blade jet 15 of the first fluid product.

The two heads 5 and 6 are positioned on the main body in such a way that the first nebulised jet in the form of a blade 15 and the second jet in the form of a cone are incident in a mixing zone 20 located at a distance "f" from the two heads 5, 6.

The mixing zone extends for at least 15 centimetres along the first predetermined direction of the first nebulised jet 15.

Moreover, the mixing zone 20 is at least 10 centimetres from the first nozzle 9 along the first predetermined direction of the first jet 15.

The above mentioned values are very important in particular as a function of the chemical features of the fluid products to be dispensed.

For example, if the first fluid product is a water-based bicomponent adhesive and the second fluid product is the respective catalyst, it is essential that the mixing zone 20 is quite far from the dispensing point of the two products, at least 10 centimetres, and quite extended along the longitudinal direction of extension (that is, corresponding to the larger semi-axis of the ellipse of the cone jet 15), by at least 20 centimetres.

This is due to the fact that the water-based bicomponent adhesive and its respective catalyst are activated in a minimum time, corresponding to an instantaneous activation.

Therefore, if the mixing zone 20 were too close to the dispensing points of the two jets, that is to say, when the expansion of the two jets has not occurred in an optimum manner, there would be the inevitable formation of solid lumps.

For example, the first head 5 is fixed relative to the main body 2 whilst the second head 6 can be oriented with respect to the first head 5 along the arrow "g".

In this way, adjusting the second head 6 and, therefore, the relative jet 16 it is possible to vary the distance "f" of the mixing zone 20 of incidence of the two jets 15, 16.

According to a correct adjustment of the two jets 15, 16, the base of the cone jet 16 is fully within the height "h" of the jet 15 of the blade type. Advantageously, the mixing zone 20 is set up to start at 10 cm from the spray device 1 and may extend up to 100 cm.

The variation of the amplitude of the mixing zone may be obtained by using nozzles having outlets with different nebulising angles, advantageously between 15° and 60°.

This guarantees that the second product impacts completely with the blade jet 15 of the first product guaranteeing, on the one hand, the complete mixing and, on the other hand, avoiding unnecessary dispersions of the second product into the environment.

This also guarantees that the cone jet 16, given its smaller concentration of particles per unit of space relative to the blade jet 15, does not deviate the direction of the blade jet 15 of the first fluid product, corresponding to the main direction of use of the spray device 1.

In short, the quantity of motion connected to the particles of the second fluid product distributing on an extended surface of impact (blade-base intersection of the cone) exerts negligible effects on the jet of the first fluid product determining the absence of deformation of the jet.

For example, the first product may comprise a water-based bicomponent adhesive and the second product a catalyst specifically for catalysing the bicomponent adhesive.

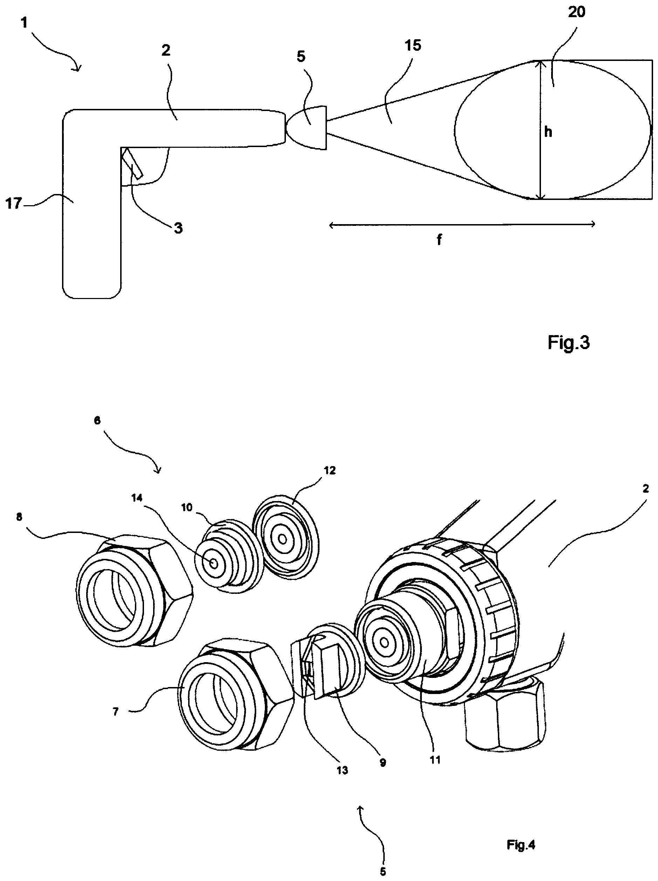

Figure 4 shows an exploded view of some components included in the spray device 1 according to the invention.

The head 5 is screwed rigidly to the main body 2 whilst the second head 6 is located in a lateral position relative to the first head 5.

The heads 5, 6 comprise the following components:
- respective main dispensing means 11, 12 which allow the escape of a predetermined quantity of first and second fluid product without transport air from the main body or from relative feeds (for example, feed pipes connected outside the main body 2),
- respective nozzles 9, 10 which perform the primary function of generating a jet 15, 16 having a predetermined shape; the shape of the jet is a direct function of the cross-section of the respective passage slot 13, 14;
- means 7, 8 for locking the first two components, for example by means of a perforated and threaded nut.

More specifically, in order to generate the first jet 15 in the form of a blade the first nozzle 9 comprises an outfeed slot 13 with a rectangular cross-section.

On the other hand, in order to generate the second jet 16 in the form of a cone the second nozzle 10 comprises a slot with a circular cross-section 14 also advantageously conical.

At least the second nozzle 10 having the conical circular slot 14 allows the nebulising of the second fluid product.

In order to regulate in an optimum fashion the distance "f" of the mixing zone of the two products relative to the two heads 5, 6, the spray device 1 may comprise means for manual adjustment of the orientation of the second head 6 relative to the first head 5.

Advantageously, the first 15 and the second 16 jet, both nebulised, are generated simultaneously by actuating a switch means 3.

According to a possible embodiment of a spray device 1 according to the invention, the device 1 has the form of a gun 17 having a grip portion and the above-mentioned switch means comprises a trigger.

## Claims

1. An airless spray device (1) comprising:
- a main body (2),
- at least a first (5) and a second (6) airless spray head of a respective first and second fluid product located on the main body (2),
**characterized in that** the first head (5) comprises a first nozzle (9) shaped to emit a first nebulised jet (15) in the form of a blade of the first fluid product along a first predetermined direction and
wherein the second head (6) comprises a second nozzle (10) shaped to emit a second nebulised jet (16) in the form of a cone of the second fluid product along a second direction incident to the first predetermined direction of the first jet (15),
the first nebulised jet in the form of a blade (15) and the second jet in the form of a cone being incident in a mixing zone (20) wherein the mixing zone (20) extends for at least 15 centimetres along the first predetermined direction of the first nebulised jet (15) and that the mixing zone (20) is at least 10 centimetres from the first nozzle (9) along the first predetermined direction of the first jet (15).

2. The spray device (1) according to claim 1, wherein the mixing zone (20) is shaped in the form of an ellipse having the relative larger semi-axis oriented in the same direction as the first predetermined direction of the first jet (15).

3. The spray device (1) according to claim 2, wherein the ratio between the larger semi-axis and the smaller semi-axis of the ellipse, corresponding to the mixing zone (20), is between 1:1 and 5:1.

4. The spray device (1) according to any one of the preceding claims, wherein the second head (6) can be oriented relative to the first head (5) for adjusting the distance (f) of the mixing zone (20) with respect to the heads (5) and (6).

5. The spray device (1) according to any one of the preceding claims, wherein the first nozzle (9) comprises a slot with a rectangular cross-section (13).

6. The spray device (1) according to any one of the preceding claims, wherein the second nozzle (10) comprises a slit with a circular cross-section (14).

7. The spray device (1) according to any one of the preceding claims, wherein the second nozzle (10) allows the nebulising of the second fluid product.

8. The spray device (1) according to any one of the preceding claims, wherein the first fluid product comprises a water-based bicomponent adhesive.

9. The spray device (1) according to claim 8, wherein the second fluid product comprises a catalyst designed to catalyse the water-based bicomponent adhesive.

10. The spray device (1) according to any one of the preceding claims, wherein the first (15) and the second (16) nebulised jet are generated simultaneously by actuating switch means (3).

11. The spray device (1) according to any one of the preceding claims, wherein the device has the shape of a gun (17) and the switch means (3) comprise a trigger.

## Patentansprüche

1. Airless-Sprühgerät (1), umfassend:
- einen Hauptkörper (2),
- mindestens einen ersten (5) und einen zweiten (6) Airless-Sprühkopf eines jeweiligen ersten und zweiten fluiden Produkts, das sich am Hauptkörper (2) befindet,
**dadurch gekennzeichnet, dass** der erste Kopf (5) eine erste Düse (9) umfasst, die geformt ist, um einen ersten zerstäubten Strahl (15) in Form einer Schaufel des ersten fluiden Produkts entlang einer ersten vorbestimmten Richtung zu emittieren, und wobei der zweite Kopf (6) eine zweite Düse (10) umfasst, die geformt ist, um einen zweiten zerstäubten Strahl (16) in Form eines Kegels des zweiten fluiden Produkts entlang einer zweiten Richtung zu emittieren, die in die erste vorbestimmte Richtung des ersten Strahls (15) einfällt,
wobei der erste zerstäubte Strahl in Form einer Schaufel (15) und der zweite Strahl in Form eines Kegels in eine Mischzone (20) einfallen, wobei sich die Mischzone (20) mindestens 15 cm entlang der ersten vorbestimmten Richtung des ersten zerstäubten Strahls (15) erstreckt und dass die Mischzone (20) sich mindestens 10 Zentimeter von der ersten Düse (9) entlang der ersten vorbestimmten Richtung des ersten Strahls (15) befindet.

2. Sprühgerät (1) nach Anspruch 1, wobei die Mischzone (20) in Form einer Ellipse geformt ist, deren relativ größere Halbachse in der gleichen Richtung wie die erste vorbestimmte Richtung des ersten Strahls (15) ausgerichtet ist.

3. Sprühgerät (1) nach Anspruch 2, wobei das Verhältnis zwischen der größeren Halbachse und der kleineren Halbachse der Ellipse, entsprechend der Mischzone (20), zwischen 1:1 und 5:1 liegt.

4. Sprühgerät (1) nach einem der vorhergehenden Ansprüche, wobei der zweite Kopf (6) relativ zum ersten Kopf (5) zum Einstellen des Abstands (f) der Mischzone (20) in Bezug auf die Köpfe (5) und (6) ausgerichtet werden kann.

5. Sprühgerät (1) nach einem der vorhergehenden Ansprüche, wobei die erste Düse (9) einen Schlitz mit einem rechteckigen Querschnitt (13) umfasst.

6. Sprühgerät (1) nach einem der vorhergehenden Ansprüche, wobei die zweite Düse (10) einen Schlitz mit einem kreisförmigen Querschnitt (14) umfasst.

7. Sprühgerät (1) nach einem der vorhergehenden Ansprüche, wobei die zweite Düse (10) das Zerstäuben des zweiten fluiden Produkts ermöglicht.

8. Sprühgerät (1) nach einem der vorhergehenden Ansprüche, wobei das erste fluide Produkt einen Zweikomponentenklebstoff auf Wasserbasis umfasst.

9. Sprühgerät (1) nach Anspruch 8, wobei das zweite fluide Produkt einen Katalysator umfasst, der zum Katalysieren des Zweikomponentenklebstoffs auf Wasserbasis ausgelegt ist.

10. Sprühgerät (1) nach einem der vorhergehenden Ansprüche, wobei der erste (15) und der zweite (16) zerstäubte Strahl gleichzeitig durch Betätigen eines Schaltmittels (3) erzeugt werden.

11. Sprühgerät (1) nach einem der vorhergehenden Ansprüche, wobei das Gerät die Form einer Pistole (17) aufweist und die Schaltmittel (3) einen Abzug umfassen.

## Revendications

1. Dispositif de pulvérisation sans air (1) comprenant :
- un corps principal (2),
- au moins une première (5) et une deuxième (6) tête de pulvérisation sans air d'un premier et d'un deuxième produit fluide respectifs situées sur le corps principal (2),
**caractérisé en ce que** la première tête (5) comprend une première buse (9) formée pour émettre un premier jet nébulisé (15) sous la forme d'une lame du premier produit fluide le long d'une première direction prédéterminée et
dans lequel la deuxième tête (6) comprend une deuxième buse (10) formée pour émettre un deuxième jet nébulisé (16) sous la forme d'un cône du deuxième produit fluide le long d'une deuxième direction incidente à la première direction prédéterminée du premier jet (15),
le premier jet nébulisé sous la forme d'une lame (15) et le deuxième jet sous la forme d'un cône étant incident dans une zone de mélange (20) dans laquelle la zone de mélange (20) s'étend sur au moins 15 centimètres le long de la première direction prédéterminée du premier jet nébulisé (15) et que la zone de mélange (20) est au moins à 10 centimètres de la première buse (9) le long de la première direction prédéterminée du premier jet (15) .

2. Dispositif de pulvérisation (1) selon la revendication 1, dans lequel la zone de mélange (20) est formée sous la forme d'une ellipse ayant le demi-axe relativement plus grand orienté dans la même direction que la première direction prédéterminée du premier jet (15).

3. Dispositif de pulvérisation (1) selon la revendication 2, dans lequel le rapport entre le demi-axe le plus grand et le demi-axe le plus petit de l'ellipse, correspondant à la zone de mélange (20), est compris entre 1:1 et 5:1.

4. Dispositif de pulvérisation (1) selon l'une quelconque des revendications précédentes, dans lequel la deuxième tête (6) peut être orientée par rapport à la première tête (5) pour régler la distance (f) de la zone de mélange (20) par rapport aux têtes (5) et (6).

5. Dispositif de pulvérisation (1) selon l'une quelconque des revendications précédentes, dans lequel la première buse (9) comprend une fente avec une section transversale rectangulaire (13).

6. Dispositif de pulvérisation (1) selon l'une quelconque des revendications précédentes, dans lequel la deuxième buse (10) comprend une fente avec une section transversale circulaire (14).

7. Dispositif de pulvérisation (1) selon l'une quelconque des revendications précédentes, dans lequel la deuxième buse (10) permet la nébulisation du deuxième produit fluide.

8. Dispositif de pulvérisation (1) selon l'une quelconque des revendications précédentes, dans lequel le premier produit fluide comprend un adhésif bicomposant à base d'eau.

9. Dispositif de pulvérisation (1) selon la revendication 8, dans lequel le deuxième produit fluide comprend un catalyseur conçu pour catalyser l'adhésif bicomposant à base d'eau.

10. Dispositif de pulvérisation (1) selon l'une quelconque des revendications précédentes, dans lequel le premier (15) et le deuxième (16) jet nébulisé sont générés simultanément par l'actionnement d'un moyen de commutation (3).

11. Dispositif de pulvérisation (1) selon l'une quelconque des revendications précédentes, dans lequel le dispositif a la forme d'un pistolet (17) et le moyen de commutation (3) comprend une gâchette.
